# EUROPEAN PATENT APPLICATION

(11) **EP 1 849 742 A2**
(43) Date of publication of application: **31.10.2007**
(21) Application number: 07101112.6
(22) Date of filing: 24.01.2007
(51) Int. Cl.: B66C 19/00, B60K 17/04

(54) **Gantry Driving Mechanism For Container Gantry Crane**

(30) Priority: 30.04.2006 CN 200620041542 U
(71) Applicant: Shanghai Zhenhua Port Machinery Co., Ltd., 200125 Shanghai (CN)
(72) Inventor: Hong, Tian Shanghai Zhenhua Port Machinery Co., Ltd., 200125, Shanghai (CN); Guangyu, Liu Shanghai Zhenhua Port Machinery Co., Ltd., 200125, Shanghai (CN); Baoren, Pei Shanghai Zhenhua Port Machinery Co., Ltd., 200125, Shanghai (CN); Gang, He Shanghai Zhenhua Port Machinery Co., Ltd., 200125, Shanghai (CN)
(74) Representative: Vorberg, Jens

(57) **Abstract**

A gantry driving mechanism for a container gantry crane is disclosed, comprising: a driving motor (21), a reducer (22), a wheel (23) and a supporting frame for the wheel (23), wherein the supporting frame for the wheel (23) is a cantilever frame (24), a motor holding box (241) is provided and extends on one side at an upper portion the cantilever frame (24), the driving motor (21) being disposed in the motor holding box (241); the reducer (22) is a gear reducer having a high-speed shaft (221) and a low-speed shaft (229), the gear reducer (15) being disposed inside the cantilever frame (24), the high-speed shaft (221) being connected with a shaft of the driving motor (21), the low-speed shaft (229) being disposed in and penetrating through the lower portion of the cantilever frame (24); and the wheel (23) is disposed on the low-speed shaft (229).

## Description

### Field of Invention

The present invention relates to a driving mechanism for an equipment for loading/unloading and transportation of containers, and particularly to a gantry driving mechanism for a container gantry crane.

### Background

Container gantry crane (RTG) is a loading/unloading mechanism for loading/unloading and stocking containers in the terminals. The RTG comprises a gantry span, a driving mechanism provided on both sides of the gantry span, and a loading/unloading mechanism provided on a grid of the gantry span. By making use of the loading/unloading mechanism, the RTG stocks containers from the terminal in the yard or loads containers stocked in the yard on a transportation equipment to transport to the terminal. The driving mechanism of the RTG drives the gantry span to move smoothly along the yard.

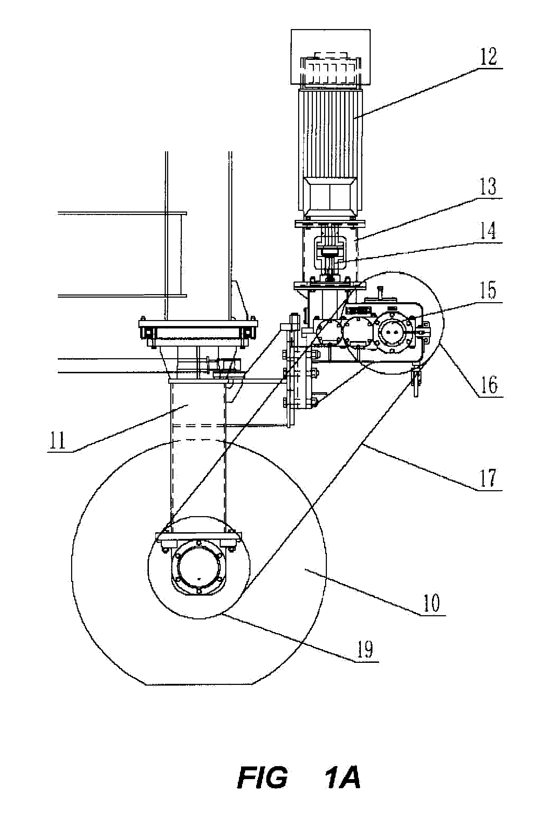

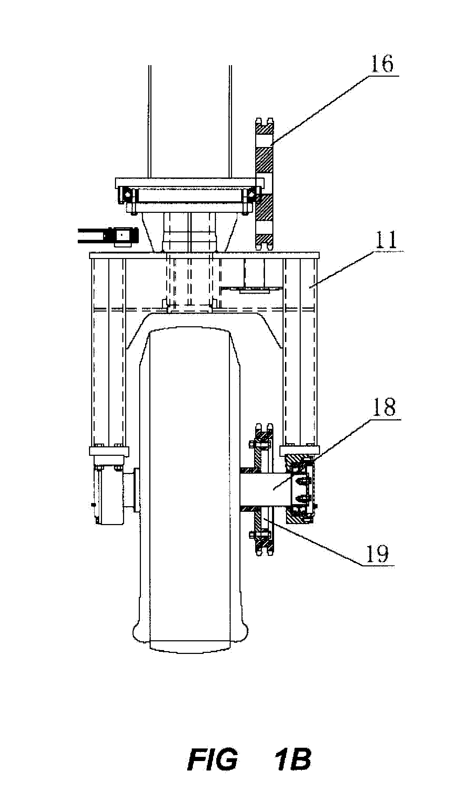

A conventional RTG comprises a driving mechanism as shown in Figure 1. Wheels 10 are amounted under an inverted-U shape frame 11, and on the other side of the frame 11, a driving means mainly consisting of a motor, a clutch, a reducer and a chain, wherein a flange 13, the clutch 14 and the reducer 15 are sequentially connected on the output shaft of the motor 12, and the output of the reducer 15 drives a minor sprocket 16, which drives a large sprocket 19 disposed on a shaft 18 of the wheel by the chain 17. However, as seen from the structure shown in Figure 1, the mechanism has the following deficiencies:
1. the motor 12 and the reducer 15 protrude to the outside and thus are easily to be damaged due to collision;
2. the transmission of the sprockets and the chain is not stable, the transmission of the chain is limited by speed, the stretch of the chain shall be frequently adjusted, and the chain is easily broken;
3. the occupied area is large, and the appearance of the mechanism is not beautiful to look at; and
4. wheels are straddled under the inverted-U shape frame 11, and thus the repair and mounting/dismounting of the wheels are not convenient.

### Summary

The technical problem to be solved is to provide a gantry driving mechanism for a container gantry crane, which does not employ chain drive, and which overcomes the problem of the difficulty in the maintenance of the wheel.

According to the present invention, providing a gantry driving mechanism for a container gantry crane, comprising: a driving motor, a reducer, a wheel and a supporting frame for the wheel, wherein the supporting frame for the wheel is a cantilever frame, a motor holding box is provided and extends on one side at an upper portion the cantilever frame, the driving motor being disposed in the motor holding box; the reducer is a gear reducer having a high-speed shaft and a low-speed shaft, the gear reducer being disposed inside the cantilever frame, the high-speed shaft being connected with a shaft of the driving motor, the low-speed shaft being disposed in and penetrating through the lower portion of the cantilever frame; and the wheel is disposed on the low-speed shaft.

The gear reducer has the following structure: it comprises a first level reduction assembly, a transmission shaft, a second level reduction assembly, and an idle gear transmission assembly, and wherein the first level reduction assembly comprise an input stage pinion gear and an input stage master gear, the second level reduction assembly comprises a second level pinion gear and an output stage master gear, and the idle gear transmission assembly comprise a small idle gear and a big idle gear; and wherein the input stage pinion gear is disposed on the high-speed shaft, and the input stage master gear engages with the input stage pinion gear; one end of the transmission shaft is connected with the input stage master gear, while the other end is connected with the second level pinion gear, which engages with the big idle gear, the big idle gear engages with the small idle gear, which engages with the output stage master gear; and the output stage master gear is disposed on the low-speed shaft.

The gantry driving mechanism for a container gantry crane according to the above, wherein the inner side of the wheel is disposed on said low-speed shaft.

The gantry driving mechanism for a container gantry crane according to the above, wherein the outer side of the wheel is disposed on said low-speed shaft.

The gantry driving mechanism for a container gantry crane according to the above, wherein the high-speed shaft, shafts of the small and big idle gears and the low-speed shaft of the reducer are disposed in the side wall of the cantilever frame.

By using the above design, the present invention has the following advantages over the prior arts:
1. Cantilever arrangement makes the replacement of the wheel convenient and taking shorter time, and shortens the stop time due to the damage of the wheel;
2. The hidden trouble that the chain in the prior art is easy to break is eliminated, and thus prevent the workload of frequently adjusting the stretch of the chain; and
3. Directly drive makes the impact that the gantry driving mechanism is subjected to smaller, in the situations of starting-up and braking, particularly in the situation of emergency braking, so as to prevent the gear from great impact and extend the useful life of the gear.

### Brief Description of the Drawings

The features and advantageous of the present invention will described in the following embodiments when taken in conjunction with the accompanying drawings, wherein:
Figure 1 is a schematic diagram of a driving mechanism of a conventional RTG, wherein Figure 1A is the front view and Figure 1B is a left view of Figure 1A;
Figure 2 is a schematic diagram of a driving mechanism of the present invention, wherein Figure 2A is a front view and Figure 2B is a right view of Figure 2A; and
Figure 3 is a schematic diagram of the transmission of an exemplified gear reducer of the embodiment as shown in Figure 2.

### Detailed Description of Preferred Embodiments

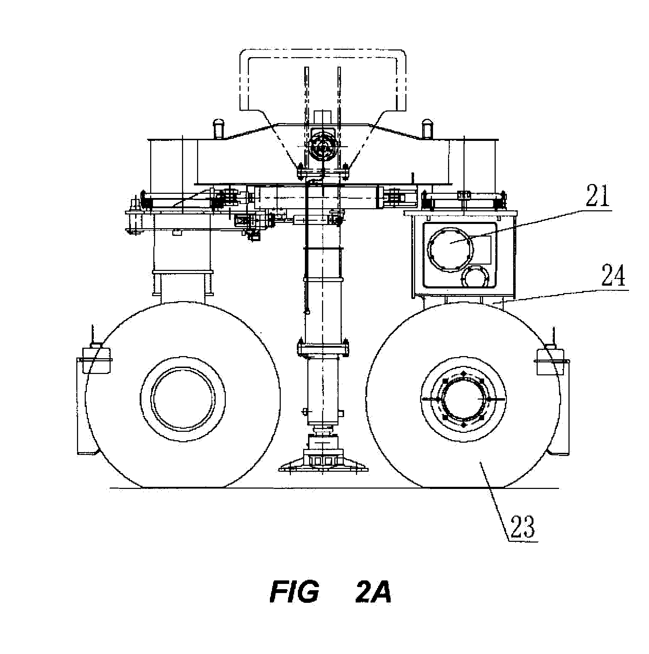

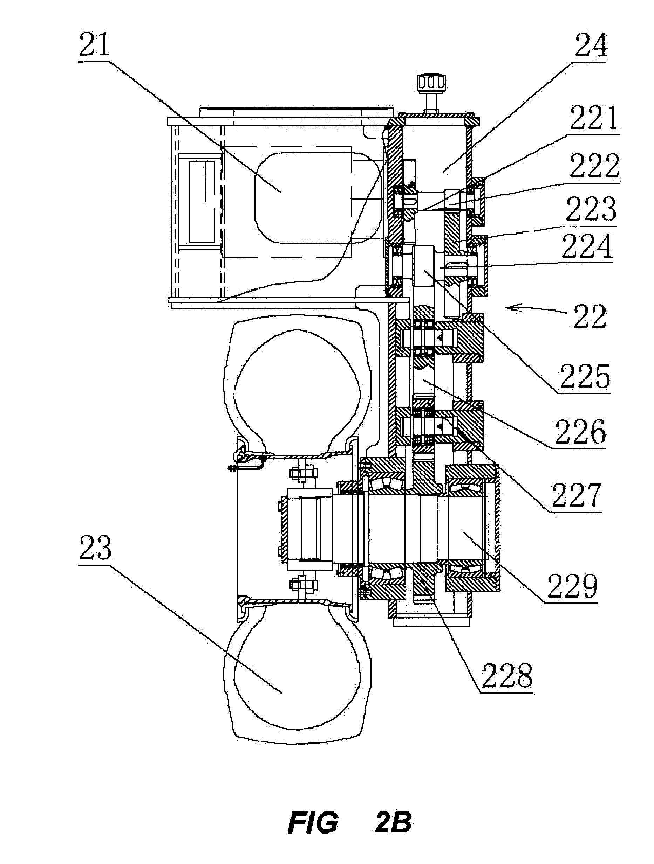

Referring now to Figure 2, the driving mechanism of the RTG according to one embodiment of the present invention comprises a driving motor 21, a reducer 22, a wheel 23 and a cantilever frame 24. The driving motor 21 drives the reducer 22 and eventually drives the wheel.

The cantilever frame 24 is different from the conventional inverted-U shape frame in that it has only one leg, and one side of the wheel 23 is disposed under the cantilever frame 24 while the other side exposes to the outside to be easily repaired. The exposed side could be the inner side or outer side of the wheel 23. The cantilever frame 24 is characterized in that a motor holding box 241 is provided on one side of the cantilever frame 24 above the wheel 23, and the portion of the cantilever frame 24 between the motor holding box and the shaft 230 of the wheel serves as a cabinet 240 of the reducer 22. The driving motor 21 is disposed in the motor holding box 241, while the reducer 22 is disposed in the cabinet 240 and between the shaft of the motor and the shaft of the wheel. The reducer 22 is a gear reducer having a high-speed shaft 221 and a low-speed shaft 229. The high-speed shaft 221 is connected with the shaft of the motor, the low-speed shaft 229 is disposed in and penetrates through the lower portion of the cantilever frame 24, and the wheel is disposed on the low-speed shaft 229. By this design, the cabinet of the reducer 22 is integrated with the frame 24, and the driving motor is also cleverly disposed in the structure of the cantilever frame 24, thus making the structure of the entire driving mechanism compact.

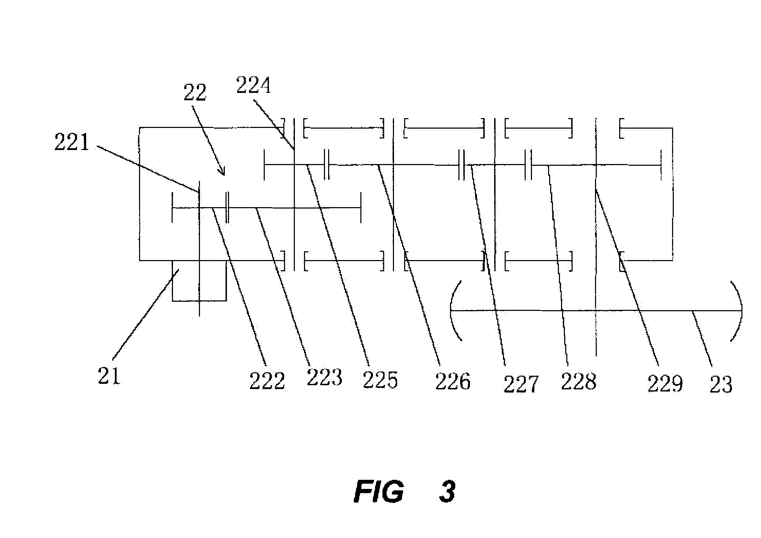

The structure of the gear reducer 22 can be selected in accordance with the reduction ratio. An exemplified embodiment of the gear reducer 22 is described by referring to Figures 2 and 3. In this embodiment, the reducer 22 has a double reduction structure, and idle gears are provided in accordance with the transmission requirements. The concrete structure is as follows.

The reducer 22 comprises the high-speed shaft 221, a first level reduction assembly consisting of an input stage pinion gear 222 and an input stage master gear 223, a transmission shaft 224, a second level reduction assembly consisting of a second level pinion gear 225 and an output stage master gear 228, a small idle gear 226, a big idle gear 227 and the low-speed shaft 229. The input stage pinion gear 222 is disposed on the high-speed shaft 221, and the input stage master gear engages with the input stage pinion gear 222. One end of the transmission shaft is connected with the input stage master gear 223, while the other end is connected with the second level pinion gear 225, which engages with the big idle gear 226. The big idle gear 26 engages with the small idle gear 227, which engages with the output stage master gear 228 disposed on the low-speed shaft 229. The high-speed shaft 221, the transmission shaft 224, the low-speed shaft 229 and the shafts of the small and big idle gears are all disposed in the side wall of the cantilever frame 24 that serves as the cabinet 220 of the reducer.

By using the above structure, the driving motor 21 drives the high-speed shaft 221 of the reducer 22, and by the double reduction and by the transmission of the idle gears, the low-speed 229 of the reducer 22 drives the shaft 230 of the wheel. Such a transmission is simple, and as it utilizes a gear driving structure, the transmission is reliable.

As described above, the structure of the reducer 22 is only an example. In alternative embodiments, in order to obtain larger transmission ratio, more levels of reduction assemblies could be used, as long as a pinion gear in a level reduction assembly is connected with a master gear in an immediately preceding level reduction assembly via a transmission shaft. Also, the small and big idle gears 226 and 227 are disposed for enabling the second level pinion gear 225 to drive the output stage master gear 228 on the low-speed shaft 229, and to make the transmission more reliable. However, if the motor 21 is disposed closer to the low-speed shaft 229 such that the second level pinion gear 225 is close enough to the output stage master gear 228, or if more levels of reduction assemblies are used, the idle gears are not necessary.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A gantry driving mechanism for a container gantry crane, comprising:
a driving motor (21);
a reducer (22);
a wheel (23); and
a supporting frame for the wheel (23);
wherein the supporting frame for the wheel (23) is a cantilever frame (24), a motor holding box (241) is provided and extends on one side at an upper portion the cantilever frame (24), the driving motor (21) being disposed in the motor holding box (241); the reducer (22) is a gear reducer having a high-speed shaft (221) and a low-speed shaft (229), the gear reducer being disposed inside the cantilever frame (24), the high-speed shaft (221) being connected with a shaft of the driving motor (21), the low-speed shaft (229) being disposed in and penetrating through the lower portion of the cantilever frame (24); and the wheel (23) is disposed on the low-speed shaft (229).

2. The gantry driving mechanism for a container gantry crane according to claim 1, wherein the gear reducer further comprises a first level reduction assembly, a transmission shaft (224), a second level reduction assembly, and an idle gear transmission assembly, and wherein the first level reduction assembly comprise an input stage pinion gear (222) and an input stage master gear (223), the second level reduction assembly comprises a second level pinion gear (225) and an output stage master gear (228), and the idle gear transmission assembly comprise a small idle gear (226) and a big idle gear (226); and wherein the input stage pinion gear (222) is disposed on the high-speed shaft (221), and the input stage master gear (223) engages with the input stage pinion gear (222); one end of the transmission shaft (224) is connected with the input stage master gear (223), while the other end is connected with the second level pinion gear (225), which engages with the big idle gear (226), the big idle gear (226) engages with the small idle gear (227), which engages with the output stage master gear (228); and the output stage master gear (228) is disposed on the low-speed shaft (229).

3. The gantry driving mechanism for a container gantry crane according to claim 1, wherein the inner side of the wheel (23) is disposed on said low-speed shaft (229).

4. The gantry driving mechanism for a container gantry crane according to claim 1, wherein the outer side of the wheel (23) is disposed on said low-speed shaft (229).

5. The gantry driving mechanism for a container gantry crane according to claim 1, wherein the high-speed shaft (221), shafts of the small and big idle gears (226; 227) and the low-speed shaft (229) of the reducer (22) are disposed in the side wall of the cantilever frame (24).
